# EUROPÄISCHE PATENTANMELDUNG

(11) **EP 2 597 337 A2**
(43) Veröffentlichungstag der Anmeldung: **29.05.2013**
(21) Anmeldenummer: 12188320.1
(22) Anmeldetag: 12.10.2012
(51) Int. Cl.: F16H 61/4104

(54) **Hydraulikanordnung**

(30) Priorität: 25.11.2011 DE 102011119427
(71) Anmelder: ROBERT BOSCH GMBH, 70442 Stuttgart (DE)
(72) Erfinder: Kobela, Johann, 89297 Roggenburg-Biberach (DE)
(74) Vertreter: Thürer, Andreas

(57) **Zusammenfassung**

Offenbart ist eine Hydraulikanordnung, die einen hydraulischen Kreislauf mit einer Druckmittelquelle und einer Druckmittelsenke aufweist, die über zwei Druckleitungen miteinander verbunden sind. Über ein Spülventil ist zumindest eine Druckleitung mit einem Tank verbindbar. Das Spülventil weist hierfür in einer Schaltrichtung zumindest zwei Schaltstellungen mit einem unterschiedlichen Öffnungsquerschnitt auf.

## Beschreibung

Die Erfindung geht aus von einer Hydraulikanordnung gemäß dem Oberbegriff des Patentanspruchs 1.

In der DE 10 2010 006 464 A1 ist eine derartige Hydraulikanordnung offenbart. Diese hat eine Hydropumpe und einen Hydromotor, die über zwei Druckleitungen verbunden sind und einen geschlossenen hydraulischen Kreislauf bilden. Über eine Speiseeinheit ist Druckmittel von einem Tank in die jeweilige druckniedrigere Druckleitung förderbar. Des Weiteren ist eine Spüleinheit vorgesehen mit der erwärmtes Druckmittel aus dem geschlossenen Kreislauf abführbar ist. Die Spüleinheit weist ein Spülventil und stromabwärts davon ein Druckhalteventil auf. Das Spülventil hat zwei Zulaufanschlüsse, wobei ein jeweiliger Zulaufanschluss mit einer jeweiligen Druckleitung verbunden ist. Des Weiteren weist das Spülventil einen Ablaufanschluss auf, an dem eine Tankleitung angeschlossen ist, wobei in der Tankleitung das Druckhalteventil vorgesehen ist. Ein Spülkolben des Spülventils ist von seiner Neutralstellung, in der eine Druckmittelverbindung zwischen den Anschlüssen unterbrochen ist, in einer ersten Richtung in eine erste Schaltstellung und in einer entgegen gesetzten Richtung in eine zweite Schaltstellung bringbar. In einer jeweiligen Schaltstellung ist die jeweilige druckniedrigere Druckleitung des geschlossenen Kreislaufs mit der Tankleitung über das Druckhalteventil verbindbar. Der Spülkolben ist in seiner Neutralstellung federzentriert. Eine jeweilige Stirnseite des Spülkolbens ist zur Druckbeaufschlagung mit einer jeweiligen Druckleitung in Druckmittelverbindung. Stromabwärts des Spülventils zwischen dem Spülventil und dem Druckhalteventil ist eine Drossel angeordnet. Ein Ventilschieber des Druckhalteventils ist dabei in Richtung einer Schließstellung, in der eine Druckmittelverbindung zwischen dem Spülventil und dem Tank unterbrochen ist, von einer Federkraft einer Ventilfeder und in Öffnungsrichtung, in der eine Druckmittelverbindung zwischen dem Spülventil und dem Tank aufgesteuert ist, von einem zwischen dem Spülventil und der Drossel abgegriffenen Druckmittel beaufschlagbar.

Bei einer bekannten Hydraulikanordnung der skizzierten Art sind Schwingungen im System aufgetreten, wenn der Hochdruck relativ niedrig, zum Beispiel 70 bar war oder eine mit einer derartigen Hydraulikanordnung als Fahrantrieb ausgestattete Maschine angefahren ist.

In der DE 10 2008 060 066 A1 und der US 3,846,982 ist eine weitere Ausführungsform einer Hydraulikanordnung dargestellt. Im Unterschied zu der vorstehend erläuterten Ausführungsform ist bei einer Spüleinheit zwischen einem Spülventil und einem Druckhalteventil keine Drossel angeordnet, sondern die Drosselung erfolgt durch das Spülventil in den beiden Schaltstellungen des Ventilschiebers.

Demgegenüber liegt der Erfindung die Aufgabe zugrunde eine Hydraulikanordnung zu schaffen, die Schwingungen des hydraulischen Systems bei vergleichsweise niedrigen Hochdrücken vermeidet.

Diese Aufgabe wird gelöst durch eine Hydraulikanordnung gemäß dem Patentanspruch 1.

Eine erfindungsgemäße Hydraulikanordnung hat eine Druckmittelquelle, bei der es sich insbesondere um eine Hydropumpe handelt, und eine Druckmittelsenke, die insbesondere als Hydromotor ausgestaltet ist, die über zwei Druckleitungen fluidisch verbunden sind und einen geschlossenen hydraulischen Kreislauf bilden. In der Hydraulikanordnung ist ein Spülventil mit einem Spülkolben vorgesehen. Der Spülkolben ist in zwei Schaltstellungen verschiebbar, wobei in einer ersten Schaltstellung die erste Druckleitung und in der zweiten Schaltstellung die zweite Druckleitung mit einem Tank verbindbar ist, wobei der Spülkolben im Einsatz der Hydraulikanordnung in der Schaltstellung angeordnet ist, in der die jeweils druckniedere Druckleitung mit dem Tank verbindbar ist. Zusätzlich zur ersten und zweiten Schaltstellung ist der Spülkolben in jeweils eine weitere Schaltstellung bringbar. In diesen ist der vom Spülkolben ausgesteuerte Öffnungsquerschnitt im Vergleich zur ersten und zweiten Schaltstellung vergrößert.

Die Erfindung fußt auf der Erkenntnis, dass eine zu große Spülmenge bei niedrigem Hochdruck die Ursache für die Schwingungen im hydraulischen System sein könnte. Gemäß der Erfindung verbindet nun bei einem niedrigen Druck in der druckhöheren Druckleitung, beispielsweise beim Anfahren eines Fahrzeugs, der Spülkolben in seiner ersten oder zweiten Schaltstellung die jeweils druckniedrigere Druckleitung über einen vergleichsweise geringen und drosselnden Öffnungsquerschnitt zur Spülung des geschlossen hydraulischen Kreislaufs mit Tank, wodurch ein vom geschlossenen hydraulischen Kreislauf abgezweigter Druckmittelvolumenstrom vergleichsweise gering ist. Bei höherem Hochdruck in der druckhöheren Druckleitung, beispielsweise über 70 bar, kann der Spülkolben zum Spülen des geschlossenen hydraulischen Kreislaufs dann in eine jeweilige weitere Schaltstellung geschaltet werden, wodurch der vom Spülkolben aufgesteuerte Querschnitt vergrößert ist und somit ein größerer Druckmittelvolumenstrom zum Tank abströmen kann. Durch die zweistufige Ausgestaltung des Spülventils wird eine Schwingungsneigung des Systems stark verringert. Bei niedrigem Hochdruck in der druckhöheren Druckleitung treten somit durch den vergleichsweise geringen Öffnungsquerschnitt des Spülventils im Vergleich zum Stand der Technik kaum mehr Schwingungen auf. Im Eingangs erläuterten Stand der Technik sind dagegen die Spülventile in der Regel unabhängig von der Höhe des Hochdrucks auf eine große Spülmenge, dass heißt einen großen über das Spülventil strömenden Druckmittelvolumenstrom, ausgelegt, wodurch schon bei niedrigem Hochdruck der Spülkolben des Spülventils einen großen Öffnungsquerschnitt aufsteuert. Hierdurch wird das hydraulische System stark beeinflusst, was zu Schwingungen führen kann. Bei einer erfindungsgemäßen Hydraulikanordnung ist nun die Spülmenge im niedrigen Hochdruckbereich geringer als im hohen Hochdruckbereich.

Ein Spülventil weist üblicherweise zwei Eingänge, von denen ein erster Eingang zur Verbindung mit einer ersten Druckleitung und der zweite Eingang zur Verbindung mit der zweiten Druckleitung eines geschlossenen hydraulischen Kreislaufs vorgesehen ist, einen Ausgang, von dem Druckmittel wegströmt, und einen Steuerkolben auf, der federzentriert eine neutrale Mittelstellung einnimmt und vom Druck im ersten Eingang im Sinne einer fluidischen Verbindung des zweiten Eingangs mit dem Ausgang und von dem Druck im zweiten Eingang im Sinne einer Verbindung des ersten Eingangs mit dem Ausgang beaufschlagbar ist. Bei einer bestimmten Druckdifferenz, zum Beispiel bei einer Druckdifferenz von 6 bar, zwischen dem Druck im ersten Eingang und dem Druck im zweiten Eingang wird der Steuerkolben aus der Mittelstellung verschoben und öffnet die Verbindung zwischen einem Eingang und dem Ausgang.

Vorteilhafte Ausgestaltungen der Erfindung finden sich in den Unteransprüchen.

Das Spülventil ist vorzugsweise derart ausgestaltet, dass der Spülkolben ab einem bestimmten Druck in der druckhöheren Druckleitung in die jeweilige Schaltstellung verschiebbar ist, wobei er in seiner jeweiligen ersten und zweiten Schaltstellung bis zu einem vorbestimmbaren oberen Druck der druckhöheren Druckleitung angeordnet ist und bei Überschreiten des oberen Drucks in die jeweils weitere Schaltstellung verschoben ist. Darauf hinzuweisen ist hierbei, dass der Druck in der druckniedrigeren Druckleitung, als im Niederdruckzweig des geschlossenen hydraulischen Kreislaufs üblicherweise auf einem bestimmten Wert von zum Beispiel 25 oder 30 bar eingestellt ist, so dass tatsächlich bei einem bestimmter Druck in der druckhöheren Druckleitung, also im augenblicklichen Hochdruckzweig des geschlossenen hydraulischen Kreislaufs, der Steuerkolben des Spülventils anfängt, sich aus der Mittelstellung zu bewegen..

Vorteilhafterweise ist stromabwärts des Spülventils ein Druckhalteventil vorgesehen, das ab einem vorbestimmten Druck, der niedriger als der Druck im Niederdruckzweig, zum Beispiel 15 bar ist, eine Druckmittelverbindung zwischen dem Spülventil und dem Tank aufsteuert. Im Strömungspfad zwischen dem Spülventil und dem Druckhalteventil ist eine Drossel, insbesondere in der Form einer Blende, vorgesehen. Ein Druckmittelvolumenstrom des über das Spülventil abgeführten Druckmittels kann somit zusätzlich durch die Drossel vorbestimmt werden.

Bevorzugterweise ist der vom Spülkolben in der jeweiligen ersten und zweiten Schaltstellung ausgesteuerte Öffnungsquerschnitt im Wesentlichen im Bereich des Öffnungsquerschnitts der Drossel. Ein deutlich größerer Öffnungsquerschnitt des Spülventils im Vergleich zum Öffnungsquerschnitt der Drossel würde dazu führen, dass der Öffnungsquerschnitt des Spülventils kaum mehr Einfluss auf die Größe des Druckmittelvolumenstroms hätte, der dann im Wesentlichen durch die Drossel vorgegeben wäre.

In weiterer Ausgestaltung der Erfindung ist der Spülkolben über zwei jeweils stirnseitig an diesen angreifbare Ventilfedern in seiner Neutralstellung federzentriert.

Sowohl in der ersten und als auch in der zweiten Schaltstellung kann der Spülkolben zur Verschiebebegrenzung mit seiner jeweiligen in einer jeweiligen Verschieberichtung des Spülkolbens liegenden Kolbenstirnseite an einem Anschlagkolben anliegen, der mit einer Gegenkraft in Richtung des Spülkolbens beaufschlagbar ist. Übersteigt dann eine Schaltkraft des Spülkolbens die Federkraft seiner Ventilfeder und die Gegenkraft des Anschlagkolbens, so wird er von der jeweiligen ersten oder zweiten Schaltstellung in die jeweilige weitere Schaltstellung zusammen mit dem Anschlagkolben verschoben.

Die Gegenkraft, von der der Anschlagkolben im Sinne eines Entgegenwirkens gegen eine Bewegung des Spülkolbens beaufschlagbar, ist bevorzugt eine durch eine Kolbenfeder erzeugte Kraft, kann aber auch durch Druck eines Fluids oder durch einen Magneten erzeugt sein.

Damit die auf den Anschlagkolben wirkende Gegenkraft nicht dazu führt, dass der Spülkolben aus seiner ersten oder zweiten Schaltstellung durch den jeweiligen Anschlagkolben in Richtung seiner Neutralstellung verschoben wird, sind Anschlagkolbensitze im Spülventil ausgebildet. An diesen liegen die Anschlagkolben in der ersten oder zweiten Schaltstellung des Spülkolbens an. Ein Anschlagkolben ist somit von seinem Anschlagkolbensitz nur in einer Richtung weg vom Spülkolben verschiebbar.

Zur Begrenzung eines Verschiebewegs des Spülkolbens in der jeweiligen weiteren Schaltstellung ist im Spülventil ein jeweiliger Spülkolbenanschlag vorgesehen. Wird der Spülkolben nach der ersten oder zweiten Schaltstellung zusammen mit dem Anschlagkolben in die weitere Schaltstellung entgegen der Federkraft seiner Ventilfeder und entgegen der Gegenkraft des Anschlagkolbens verschoben, so ist sein Verschiebeweg dann durch Anlage des Spülkolbens an den Spülkolbenanschlag begrenzt.

In weiterer Ausgestaltung der Erfindung kann im Bereich der Endabschnitte des Spülkolbens jeweils eine Federscheibe angeordnet sein. Über die ist der Spülkolben dann mit der Federkraft der jeweiligen Ventilfeder beaufschlagbar. Bei einer Verschiebung des Spülkolbens in seine Schaltstellungen wird die jeweils in Verschieberichtung des Spülkolbens liegende Federscheibe zusammen mit dem Spülkolben verschoben. Damit nur die jeweilige in Verschieberichtung liegende Federscheibe mit dem Spülkolben mitbewegt ist, ist im Spülventil für eine jeweilige Federscheibe ein Scheibensitz vorgesehen, gegen den eine jeweilige Federscheibe durch die Federkraft spannbar ist.

Der Spülkolben hat bevorzugterweise voneinander abweisende radial zurückgestufte Endabschnitte, wodurch jeweils eine Ringstirnfläche als Kolbenschulter am Spülkolben ausgebildet ist. An einer jeweiligen Kolbenschulter kann dann eine jeweilige Federscheibe zur Kraftbeaufschlagung des Spülkolbens mit der Federkraft der Ventilfeder anlegbar sein. Die Endabschnitte des Spülkolbens sind dann vorzugsweise durch die jeweilige ringförmige Federscheibe hindurchführbar, um in den Schaltstellungen direkt mit den Anschlagkolben mechanisch in Kontakt zu treten.

Mit Vorteil liegt der Spülkolben an dem jeweiligen Spülkolbenanschlag in der jeweiligen weiteren Schaltstellung über die jeweilige Federscheibe an.

Zum Anliegen des Anschlagkolbens am Anschlagkolbensitz hat dieser einen Radialbund, dessen zum Spülkolben weisende Ringstirnfläche als Anlagefläche für den Anschlagkolbensitz vorgesehen ist.

Der Anschlagkolben kann in einer am Ventilgehäuse festlegbaren Gehäusepatrone angeordnet sein, wobei in dieser dann der Anschlagkolbensitz und ein Federraum für die Ventilfeder und/oder ein Druckanschluss und/oder ein Bauraum für einen elektrischen Aktuator ausgebildet ist. Eine derartige Gehäusepatrone kann somit vorteilhafterweise zusammen mit dem Anschlagkolben und beispielsweise der Kolbenfeder als Einschraub-Baugruppe beziehungsweise Cartridge ausgebildet sein. Die Gehäusepatrone ist dann vorteilhafterweise für herkömmliche Spülventile, wie sie beispielsweise in dem Datenblatt RD 95 512/05.10 der Anmelderin offenbart sind, nachrüstbar. Somit kann aus einem einstufigen Spülventil einfach durch Anordnung zweier Gehäusepatronen und eventuellem Austausch der Ventilfedern ein zweistufiges Spülventil geschaffen werden.

Mit Vorteil stützen sich die jeweiligen Ventilfedern dann an der jeweiligen Gehäusepatrone ab und des Weiteren kann der Spülkolbensitz dann ebenfalls an der Gehäusepatrone ausgebildet sein.

Da sich die Erfindung im Wesentlichen in der besonderen Ausgestaltung des Spülventils manifestiert, erscheint es auch möglich, Patentansprüche auf ein Spülventil zu richten, das zwei Eingänge, von denen ein erster Eingang zur Verbindung mit einer ersten Druckleitung und der zweite Eingang zur Verbindung mit der zweiten Druckleitung eines geschlossenen hydraulischen Kreislaufs vorgesehen ist, einen Ausgang, der zum Abfluss von dem Druckmittel vorgesehen ist, und einen Steuerkolben aufweist, der federzentriert eine neutrale Mittelstellung einnimmt und vom Druck im ersten Eingang im Sinne einer fluidischen Verbindung des zweiten Eingangs mit dem Ausgang und von dem Druck im zweiten Eingang im Sinne einer Verbindung des ersten Eingangs mit dem Ausgang beaufschlagbar ist, und das zusätzlich gemäß den auf es gerichteten besonderen Merkmale aus den einzelnen derzeitigen Patentansprüchen ausgebildet ist.

Im Folgenden werden bevorzugte Ausführungsbeispiele der Erfindung anhand von Zeichnungen näher erläutert.

Es zeigen
- Figur 1: einen Hydraulikschaltplan mit einem Spülventil gemäß einem ersten Ausführungsbeispiel,
- Figur 2: einen Längsschnitt durch das Spülventil gemäß dem ersten Ausführungsbeispiel,
- Figur 3: einen vergrößerten Ausschnitt des Spülventils aus Figur 2,
- Figur 4: einen Längsschnitt durch das Spülventil gemäß dem ersten Ausführungsbeispiel, wobei ein Spülkolben in eine Schaltstellung verschoben ist;
- Figur 5: einen vergrößerten Ausschnitt des Spülventils aus Figur 4,
- Figur 6: einen Längsschnitt durch das Spülventil gemäß dem Ausführungsbeispiel, wobei der Kolben in eine weitere Schaltstellung verschoben ist,
- Figur 7: einen vergrößerten Teillängsschnitt des Spülventils aus Figur 6 und
- Figur 8: einen Teillängsschnitt eines Spülventils gemäß einem zweiten Ausführungsbeispiel.

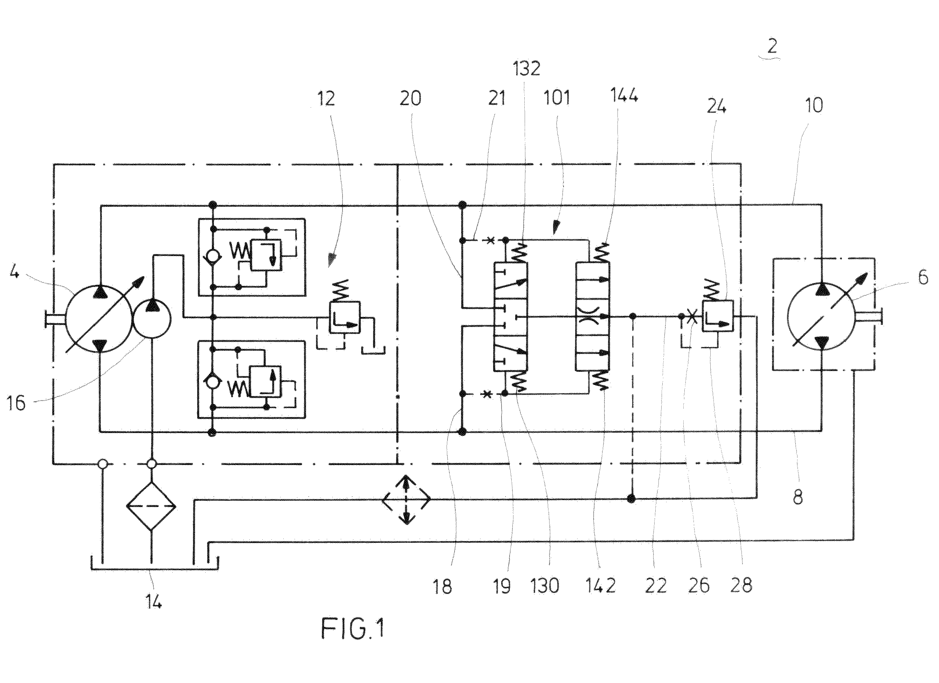

Das Spülventil 101 gemäß Figur 1 ist Teil einer Hydraulikanordnung 2, die einen geschlossenen hydraulischen Kreislauf mit einer über null verstellbaren Hydropumpe 4 und einen unter Umständen auch über null verstellbaren Hydromotor 6 aufweist, die über Druckleitungen 8, 10 miteinander verbunden sind. In Figur 1 ist das Spülventil schaltbildmäßig so gezeichnet, als ob es zwei Ventilkolben hätte. Damit lässt sich die Funktionsweise des Spülventils besser zum Ausdruck bringen als mit nur einem gezeichneten Ventilkolben. In den in den anderen Figuren gezeigten konkreten Ausführungen hat das Spülventil nur einen Ventilkolben. Dieser wird bei niedrigen Drücken zunächst nur gegen eine schwache Feder 130 oder 132 verstellt, deren Druckäquivalent zum Beispiel 6 bar ist. Dann ist nur ein kleiner Durchflussquerschnitt im Spülventil geöffnet. Bei einem höheren Druck, zum Beispiel bei einem Druck von 70 bar wird der Ventilkolben zusätzlich gegen eine stärkere Feder 142 oder 144 verstellt und das Spülventil öffnet ganz. Über eine Speiseeinheit 12 ist Druckmittel von einem Tank 14 durch eine Speisepumpe 16 in die jeweilige druckniedrigere Druckleitung 8 beziehungsweise 10 förderbar. Über null verstellbar bedeutet, dass die Durchflussrichtung des Druckmittels durch eine Hydroeinheit (Hydropumpe oder Hydromotor) unter Beibehaltung der Drehrichtung der Hydroeinheit umkehrbar ist.

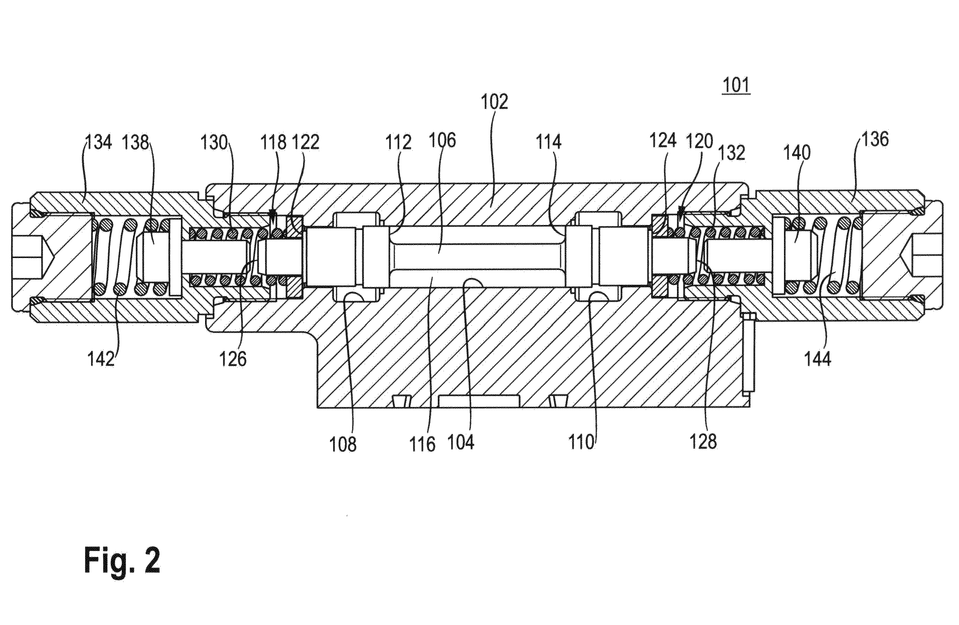

Gemäß Figur 2 hat das Spülventil 101 ein Spülventilgehäuse 102 mit einer als Durchgangsbohrung ausgebildeten Kolbenbohrung 104 in der gleitend ein Spülkolben 106 geführt ist. Im Spülventilgehäuse 102 sind zwei die Kolbenbohrung 104 umgreifende Ringräume 108 und 110 ausgebildet, die in Längsrichtung der Kolbenbohrung 104 voneinander beabstandet sind. Der in der Figur 1 linke Ringraum 108 ist dabei mit der ersten Druckleitung 8 über eine Zulaufleitung 18 der Hydraulikanordnung 2 aus Figur 1 und der rechte Ringraum 110 mit der zweiten Druckleitung 10 über eine Zulaufleitung 20, siehe Figur 1, verbunden. Der Spülkolben 106 ist mittig radial zurückgestuft, wodurch eine erste linke Steuerkante 112 und eine zweite rechte Steuerkante 114 gebildet sind. Durch die radiale Zurückstufung des Spülkolbens 106 begrenzt dieser zusammen mit der Kolbenbohrung 104 im Spülventilgehäuse 102 einen Ringraum 116, der über einen nicht dargestellten im Spülventilgehäuse 102 ausgebildeten Ablaufanschluss mit einer Ablaufleitung 22 aus Figur 1 verbunden ist. Durch die Steuerkante 112 des Spülkolbens 106 ist eine Druckmittelverbindung zwischen dem Ringraum 108 und dem Ringraum 116 und über die Steuerkante 114 eine Druckmittelverbindung zwischen dem Ringraum 110 und dem Ringraum 116 steuerbar.

Ein jeweiliger Endabschnitt 118 und 120 des Spülkolbens 106 ist radial zurückgestuft, wodurch jeweils eine Ringstirnfläche 122 beziehungsweise 124 und eine Stirnfläche 126 beziehungsweise 128 am Spülkolben 106 ausgebildet ist. Die Ringstirnfläche 122 und die Stirnfläche 126 des Endabschnitts 118 sind dabei mit Druckmittel der ersten Druckleitung 8 aus Figur 1, die mit dem Ringraum 108 verbunden ist, zum Verschieben des Spülkolbens 106 aus seiner in der Figur 1 gezeigten Neutralstellung über eine von der Zulaufleitung 18 abzweigende gedrosselte Steuerleitung 19 beaufschlagbar und die Ringstirnfläche 124 und die Stirnfläche 128 des Endabschnitts 120 sind wiederum mit Druckmittel der zweiten mit dem Ringraum 110 verbundenen Druckleitung 10 aus Figur 1 über eine von der Zulaufleitung 20 abzweigende gedrosselte Steuerleitung 21 beaufschlagbar.

In der Figur 2 ist der Spülkolben 106 in einer federzentrierten Neutralstellung, wobei die Federzentrierung über Ventilfedern 130 beziehungsweise 132 erfolgt. In der Neutralstellung ist die Verbindung zwischen dem Ringraum 108 und dem Ringraum 116 beziehungsweise dem Ringraum 110 und dem Ringraum 116 gesperrt.

Etwa koaxial zur Kolbenbohrung 104 sind in das Spülventilgehäuse 102 zwei Gehäusepatronen 134 und 136 eingeschraubt, in denen jeweils ein Anschlagkolben 138 beziehungsweise 140 und eine Kolbenfeder 142 beziehungsweise 144 angeordnet ist. Eine jeweilige Gehäusepatrone 134 und 136 bildet zusammen mit dem jeweiligen Anschlagkolben 138 beziehungsweise 140 und der jeweiligen Kolbenfeder 142 beziehungsweise 144 eine Einschraub-Baugruppe beziehungsweise Cartridge. Durch die eingeschraubten Gehäusepatronen 134 und 136 hat das Spülventil 101 im Unterschied zum Stand der Technik eine zweistufige Öffnungsstellung, was im Folgenden näher erläutert ist.

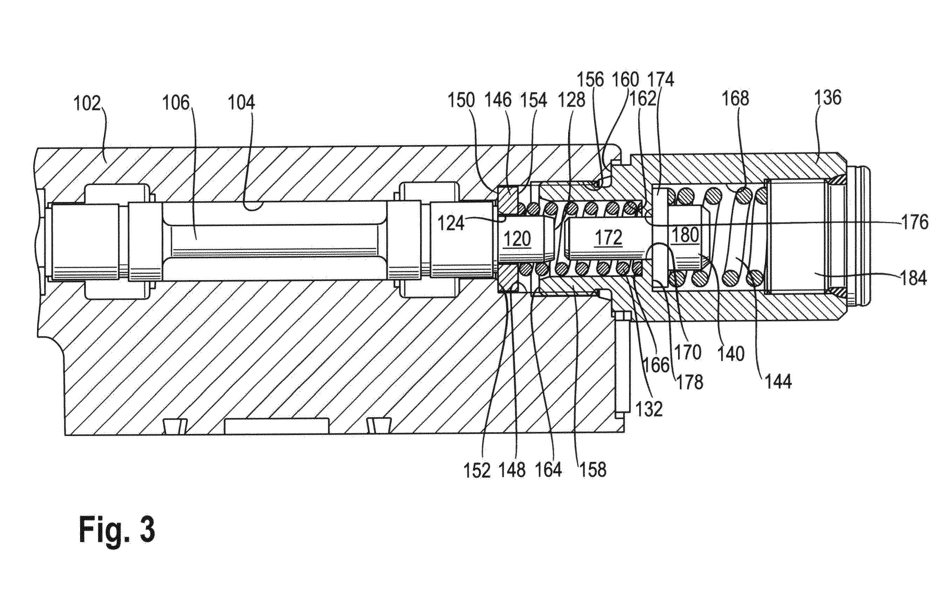

Anhand der Figur 3 wird das Spülventil 101 der Einfachheit halber nur im Bereich der in der Figur 1 rechten Gehäusepatrone 136 näher erläutert. Der in der Figur 2 linke Bereich des Spülventils 101 mit der Gehäusepatrone 134 ist entsprechend ausgestaltet. Zur Kraftbeaufschlagung des Spülkolbens 106 mit einer Federkraft der Ventilfeder 132 ist eine ringförmige Federscheibe 146 vorgesehen, die in einem radial erweiterten Endabschnitt 148 der Kolbenbohrung 104 angeordnet ist. Die Federscheibe 146 umgreift in der in der Figur 3 gezeigten Neutralstellung des Spülkolbens 106 dessen radial zurückgestuften Endabschnitt 120 und liegt mit ihrer zum Spülkolben 106 weisenden sich etwa senkrecht zur Längsachse des Spülkolbens 106 erstreckenden Ringstirnfläche 150 an der ihr gegenüberliegenden als Scheibensitz 152 durch einen radial erweiterten Endabschnitt 148 der Kolbenbohrung 104 ausgebildeten Stirnfläche des Spülventilgehäuses 102 an. Die Ringstirnfläche 124 des Spülkolbens 106 dient dabei ebenfalls als Anlagefläche der Federscheibe 146, über die der Spülkolben 106 mit der Federkraft der Ventilfeder 132 beaufschlagbar ist. Die Federscheibe 146 wird von der ihr zugeordneten Ventilfeder 132 über ihre weitere von der Ringstirnfläche 150 abweisenden Ringstirnfläche 154 mit der Federkraft beaufschlagt. Die Ventilfeder 132 stützt sich hierbei an der Gehäusepatrone 136 ab.

Ein Länge des radial zurück gestuften Endabschnitts 120 des Spülkolbens 106 ist dabei größer als eine Länge der Federscheibe 146, wodurch dessen Stirnfläche 128, in der in der Figur 3 gezeigten Neutralstellung, von der Ringstirnfläche 154 der Federscheibe 146 in Längsrichtung gesehen beabstandet ist. In dem radial zurückgestuften Endabschnitt 148 der Kolbenbohrung 104 im Spülventilgehäuse 102 ist ein Abschnitt mit einem Innengewinde 156 ausgebildet, in das die Gehäusepatrone 136 mit einem ein Außengewinde aufweisenden Gewindeabschnitt 158 eingeschraubt ist. Der Gewindeabschnitt 158 ist radial zurückgestuft, wodurch die Gehäusepatrone 136 eine zum Spülkolben 106 weisende Ringstirnfläche 160 aufweist, die zur Begrenzung der Einschraubtiefe im eingeschraubten Zustand der Gehäusepatrone 136 am Spülventilgehäuse 102 anliegt. In die Gehäusepatrone 136 ist von ihrer zum Spülkolben 106 weisenden Seite her eine Federbohrung 162 zur Aufnahme der Ventilfeder 132 eingebracht. Durch die Federbohrung 162 hat die Gehäusepatrone 136 eine zum Spülkolben 106 weisende stirnseitige Ringfläche 164 als Spülkolbenanschlag. Die Ventilfeder 132 stützt sich am Bohrungsgrund 166 der Federbohrung 162 ab.

Die Gehäusepatrone 136 weist des Weiteren eine von ihrer vom Spülkolben 106 wegweisenden Seite her eingebrachte Kolbenbohrung 168 auf, die einen größeren Durchmesser als die Federbohrung 162 hat. Etwa koaxial zum Spülkolben 106 ist in die Gehäusepatrone 106 eine die Federbohrung 162 und die Kolbenbohrung 168 verbindende Durchgangsbohrung 170 eingebracht, die wiederum einen kleineren Durchmesser als die Federbohrung 162 hat.

Der Anschlagkolben 140 ist innerhalb der Gehäusepatrone 136 etwa koaxial zum Spülkolben 106 angeordnet und hat einen stiftförmigen Anschlagabschnitt 172, der von der Kolbenbohrung 168 her durch die Durchgangsbohrung 170 hindurchgeführt ist. Nach dem Anschlagabschnitt 172 hat der Anschlagkolben 140 einen Radialbund 174, der mit seiner zum Spülkolben 106 weisenden Anlagefläche 176 am vom Spülkolben 106 wegweisenden Bohrungsgrund 178 der Kolbenbohrung 168 anlegbar ist. Nach dem Radialbund 174 weist der Anschlagkolben 140 einen vom Spülkolben 106 wegweisenden und einen größeren Durchmesser als der Anschlagabschnitt 172 aufweisenden Endabschnitt 180 auf. In der Kolbenbohrung 168 ist weiter eine Kolbenfeder 144 angeordnet, die sich an einem die Kolbenbohrung 168 verschließenden Verschlusselement 184 abstützt und den Anschlagkolben 140 über seinen Radialbund 174 mit einer Federkraft in Richtung des Spülkolbens 106 beaufschlagt, wodurch dieser in der in der Figur 2 gezeigten Position mit seiner Anlagefläche 176 gegen den Bohrungsgrund 178 der Kolbenbohrung 168 gespannt ist. Das Verschlusselement 184 ist hierbei mit einem Außengewinde in ein in der Kolbenbohrung 168 abschnittsweise ausgebildetes Innengewinde eingeschraubt.

Die mit dem Ringraum 116 aus Figur 2 verbundene Ablaufleitung 22 aus Figur 1 ist über ein Druckhalteventil 24 mit dem Tank 14 verbunden. Zwischen dem Druckhalteventil 24 und dem Spülventil 101 ist hierbei eine Blende 26, siehe Figur 1, vorgesehen, wobei ein Ventilschieber des Druckhalteventils 24 in Öffnungsrichtung über eine Steuerleitung 28 vom Druckmittel stromaufwärts der Blende 26 beaufschlagt ist. Es ist alternativ denkbar, den Ventilschieber mit dem Druckmittel stromabwärts der Blende 26 zu beaufschlagen.

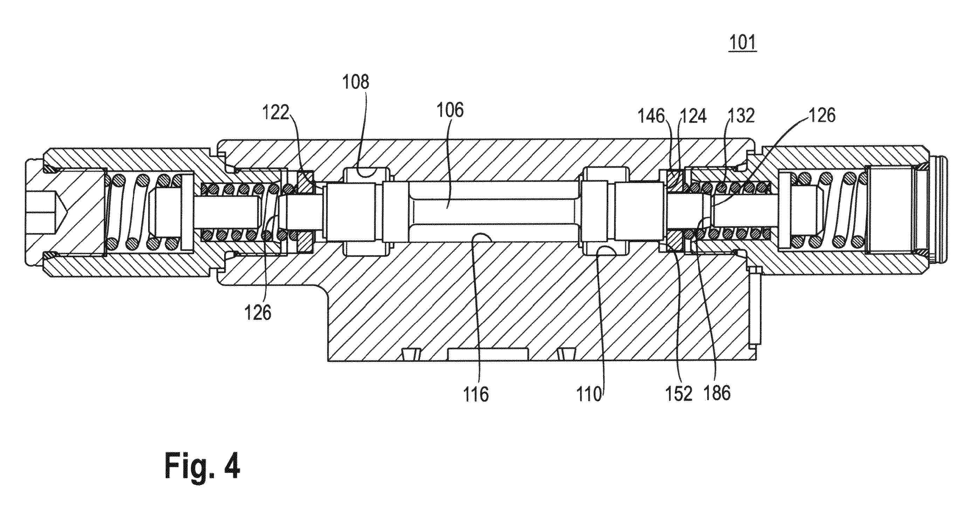

Figur 4 zeigt das Spülventil 101, wobei der Spülkolben 116 in seiner ersten Schaltstellung angeordnet ist. In dieser Schaltstellung ist die mit dem Ringraum 110 verbundene Druckleitung 10 aus Figur 1 die druckniedere und der Ringraum 110 ist mit dem mit der Ablaufleitung 22 verbundenen Ringraum 116 verbunden, während der mit der druckhöheren Druckleitung 8 verbundene Ringraum 108 vom Ringraum 116 fluidisch getrennt ist. Bei einer Verschiebung des Spülkolbens 106 in der in der Figur 4 gezeigten Schaltstellung verschiebt dieser über seine Ringstirnfläche 124 die Federscheibe 146 weg von dem Scheibensitz 152 entgegen der Federkraft der Ventilfeder 132.

Auf den Spülkolben 106 wirkt über seine Ringstirnfläche 122 und seine Stirnfläche 126 der Druck der mit dem Ringraum 108 verbundenen Druckleitung 8 aus Figur 1, bei der es sich in diesem Fall um die druckhöhere Druckleitung handelt, während auf seine gegenüberliegende Ringstirnfläche 124 und Stirnfläche 126 der Druck der mit dem Ringraum 110 verbundenen Druckleitung 10 wirkt, bei der es sich um die druckniedere Druckleitung handelt. Übersteigt die auf den Spülkolben 106 wirkende Druckdifferenz der genannten Drücke die Federkraft der Ventilfeder 132, so wird der Spülkolben 106 entsprechend der Figur 4 in seine Schaltstellung verschoben.

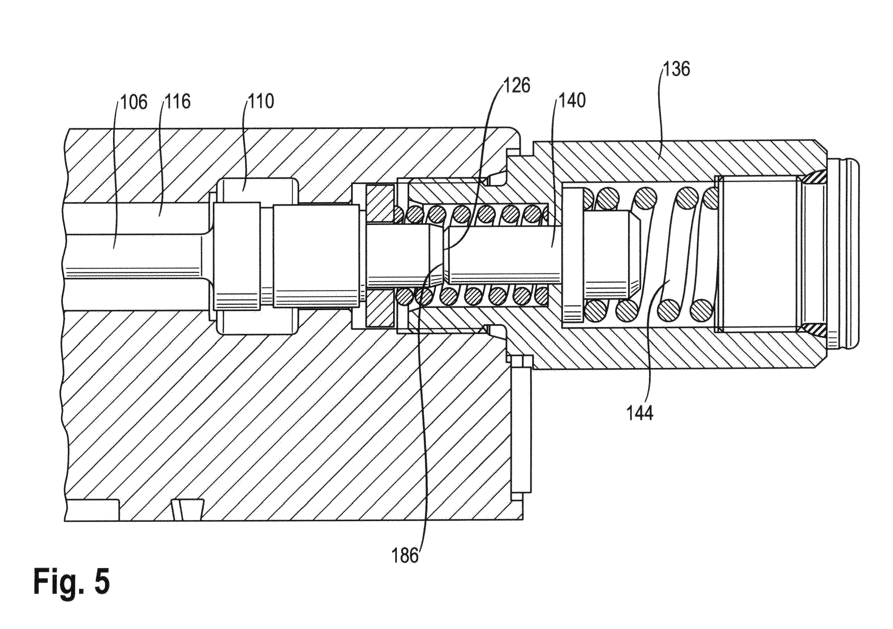

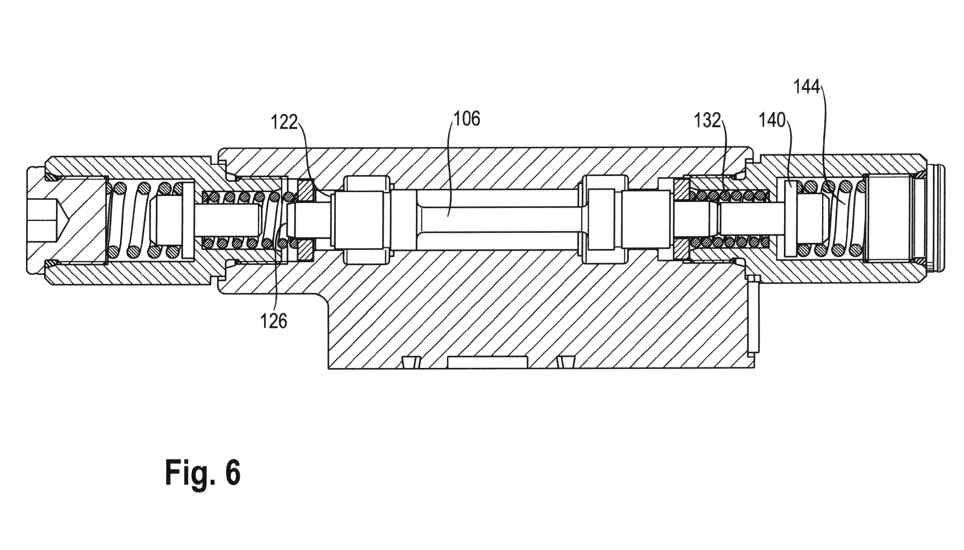

Gemäß Figur 5 ist die Verschiebung des Spülkolbens 106 in Richtung der Gehäusepatrone 136 dadurch begrenzt, dass dieser mit seiner Stirnfläche 126 an einer zum Spülkolben 106 weisenden Stirnfläche 186 des Anschlagkolbens 140 anschlägt. In der gezeigten ersten Schaltstellung des Spülkolbens 106 ist dann zwischen dem Ringraum 110 und dem Ringraum 116 ein erster Öffnungsquerschnitt ausgebildet. Der Spülkolben 106 ist, insbesondere beim Anfahren der Hydropumpe, somit in der ersten oder zweiten Schaltstellung angeordnet, wobei in der druckhöheren Druckleitung 8 dann ein vergleichsweise geringer Hochdruck vorherrscht, insbesondere kleiner als 70 bar. Steigt der Druck in der druckhöheren Druckleitung 8, der über die Ringstirnfläche 122 und Stirnfläche 126, siehe Figur 4, auf den Spülkolben 106 wirkt, derart an (insbesondere über 70 bar), dass die auf den Spülkolben 106 wirkende Druckdifferenz sowohl die Federkraft der Ventilfeder 132 als auch die Federkraft der Kolbenfeder 144 übersteigt (siehe Figur 5), dann wird der Anschlagkolben 140 vom Spülkolben 106 entgegen der auf ihn wirkenden Federkraft der Kolbenfeder 144 in seine weitere Schaltstellung verschoben, was in der Figur 6 dargestellt ist.

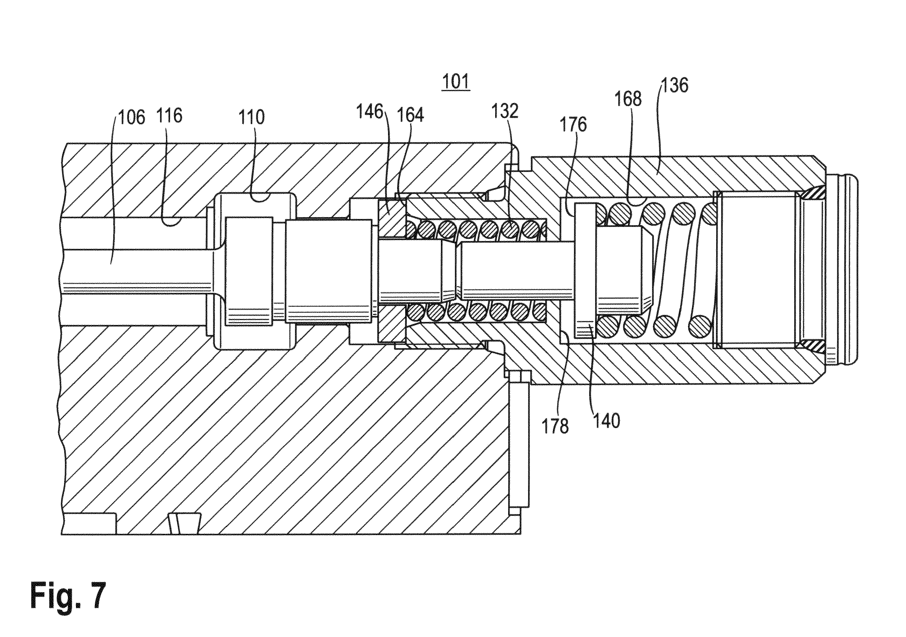

Gemäß Figur 7 liegt der Spülkolben 106 in der weiteren Schaltstellung zusammen mit der Federscheibe 146 an der Ringfläche 164 der Gehäusepatrone 136 an. Der Anschlagkolben 140 ist dabei mit seiner Anlagefläche 176 vom Bohrungsgrund 178 der Kolbenbohrung 168 beabstandet. In der weiteren Schaltstellung des Spülkolbens 106 ist dann der Öffnungsquerschnitt zwischen dem Ringraum 110 und dem Ringraum 116 größer als in der ersten Schaltstellung gemäß Figur 4 und 5, wodurch ein über das Spülventil 101 strömender Druckmittelvolumenstrom vergrößert ist.

Der Spülkolben 106 wird somit bei niedrigen Hochdrücken, insbesondere kleiner als 70 bar, in der druckhöheren Druckleitung 8 in seine erste Schaltstellung bewegt, wobei dann ein vergleichsweise geringer Öffnungsquerschnitt im Spülventil 101 aufgesteuert ist, und bei vergleichsweise hohen Hochdrücken, insbesondere ab 70 bar, in der druckhöheren Druckleitung 8 in die weitere Schaltstellung verschoben, in der ein großer Öffnungsquerschnitt ausgesteuert ist. Ist nicht die Druckleitung 8, sondern die Druckleitung 10 die druckhöhere, so wird der Spülkolben 106 entsprechend in die entgegengesetzte Richtung verschoben.

Sinkt der Druck in der druckhöheren Druckleitung 8 wieder, so wird der Spülkolben 106 aus Figur 7 über die Kolbenfeder 144 und dem Anschlagkolben 140 und über die Ventilfeder 132 zurück zur ersten Schaltstellung verschoben. Fällt der Druck weiter ab, so wird der Spülkolben 106 über die Ventilfeder 132 und die Federscheibe 146 zurück in die Neutralstellung, siehe Figur 1, bewegt.

Es ist vorteilhaft, wenn der Öffnungsquerschnitt in der ersten Schaltstellung des Spülkolbens 106 im Bereich des Öffnungsquerschnitts der Blende 26 aus Figur 1 liegt. Würde der Öffnungsquerschnitt in der ersten Schaltstellung größer sein, so wäre der Einfluss dieses Öffnungsquerschnitts auf die Größe des Druckmittelvolumenstroms wesentlich geringer, der dann im Wesentlichen vom Öffnungsquerschnitt der Blende 26 in der Ablaufleitung 22 abhängig wäre. Es wäre auch denkbar keine Blende 26 vorzusehen, wodurch die Blendenwirkung alleine durch das Spülventil 101 auftreten würde.

Die Druckhöhe, bei der der Spülkolben 106 in die erste oder die weitere Schaltstellung verschoben wird, ist durch die Federkräfte der Ventilfedern 130 beziehungsweise 132 und der Kolbenfedern 142 beziehungsweise 144 einstellbar. Es ist denkbar nur eine Gehäusepatrone 134 beziehungsweise 136 mit einem Anschlagkolben 138 beziehungsweise 140 vorzusehen, wodurch das Spülventil 101 nur in einer Verschieberichtung des Spülkolbens 106 zweistufig mit zwei unterschiedlichen Öffnungsquerschnitten ausgebildet ist, während in der anderen Verschieberichtung nur eine Stufe vorgesehen wäre.

Die Anschläge des Spülkolbens 106 in seine Schaltstellungen, das heißt die Anschlagfläche 186 aus Figur 4 und die Ringfläche 164 aus Figur 7, sind an der Gehäusepatrone 136 ausgebildet.

Das Spülventil 101 kann an eine hydraulische Einheit angebaut oder in eine hydraulische Einheit integriert oder zwischen Druckleitungen des hydraulischen Kreislaufs angeordnet sein.

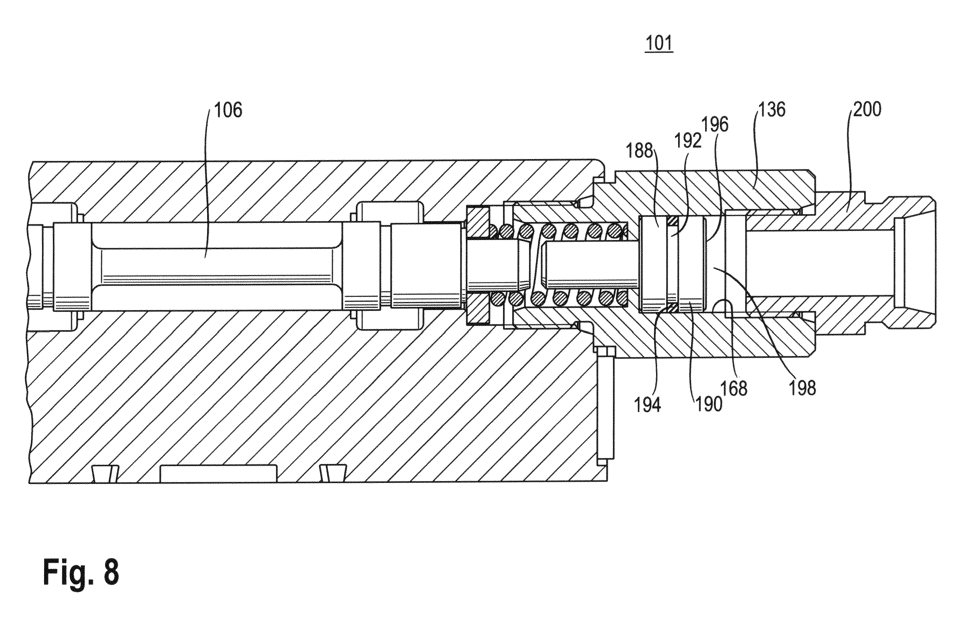

Gemäß Figur 8 ist der Anschlagkolben 188 der Gehäusepatrone 136 nicht mit der Federkraft der Kolbenfeder, sondern mit einem Druck beaufschlagbar. Hierzu hat der Anschlagkolben 188 einen in Längsrichtung gesehen verbreiterten Radialbund 190, der etwa mittig eine Ringnut 192 mit einem Dichtring 194 aufweist. Durch diesen ist der Anschlagkolben 188 dann mit seinem Radialbund 190 gleitend und dichtend in der Kolbenbohrung 168 geführt und begrenzt mit einer vom Spülkolben106 wegweisenden Stirnfläche 196 einen Druckraum 198 in der Gehäusepatrone 136. Über die Stirnfläche 196 ist der Anschlagkolben 188 dann mit einem Druck beaufschlagbar. Anstelle des Verschlusselements 184 aus Figur 3 ist in die Gehäusepatrone 136 ein Druckanschluss 200 eingeschraubt zum Anschluss einer nicht dargestellten Druckmittelquelle. Der Anschlagkolben 188 wird somit anstelle einer Federkraft mit einer Druckkraft beaufschlagt.

Alternativ zu der Federkraft der Kolbenfedern oder der Druckkraft kann der Anschlagkolben 188 auch mit einer Kraft eines elektromagnetischen Aktuators beaufschlagt werden, wobei der Aktuator beispielsweise über Magnetkräfte auf den Anschlagkolben wirkt.

Offenbart ist eine Hydraulikanordnung, die einen hydraulischen Kreislauf mit einer Druckmittelquelle und einer Druckmittelsenke aufweist, die über zwei Druckleitungen miteinander verbunden sind. Über ein Spülventil ist zumindest eine Druckleitung mit einem Tank verbindbar. Das Spülventil weist hierfür in einer Schaltrichtung zumindest zwei Schaltstellungen mit einem unterschiedlichen Öffnungsquerschnitt auf.

## Patentansprüche

1. Hydraulikanordnung mit einer Druckmittelquelle (4) und mit einer Druckmittelsenke (6), die über zwei Druckleitungen (8, 10) miteinander verbunden sind und einen geschlossen hydraulischen Kreislauf bilden, wobei ein Spülventil (101) mit einem Spülkolben (106) vorgesehen ist, der in eine erste und zweite Schaltstellung zum Verbinden der jeweils druckniederen Druckleitung (8, 10) mit einem Tank (14) bringbar ist, **dadurch gekennzeichnet, dass** der Spülkolben (106) jeweils zusätzlich zur ersten und/ oder zweiten Schaltstellung in eine weitere Schaltstellung bringbar ist, in der jeweils ein vom Spülkolben (106) aufgesteuerter Öffnungsquerschnitt im Vergleich zur ersten und/ oder zweiten Schaltstellung vergrößert ist.

2. Hydraulikanordnung nach Anspruch 1, wobei stromabwärts des Spülventils (106) ein Druckhalteventil (24) angeordnet ist und wobei im Strömungspfad zwischen dem Spülventil (106) und dem Druckhalteventil (24) eine Drossel (26) vorgesehen ist.

3. Hydraulikanordnung nach Anspruch 2, wobei der vom Spülkolben (106) aufgesteuerte Öffnungsquerschnitt in der jeweiligen ersten und zweiten Schaltstellung im Wesentlichen im Bereich des Öffnungsquerschnitts der Drossel (26) liegt.

4. Hydraulikanordnung nach einem der Ansprüche 1 bis 3, wobei der Spülkolben (106) über zwei jeweils stirnseitig an diesen angreifbare Ventilfedern (130, 132) in einer Neutralstellung federzentriert ist.

5. Hydraulikanordnung nach Anspruch 4, wobei dem Spülkolben (106) in seiner jeweiligen Verschieberichtung ein Anschlagkolben (138, 140) zugeordnet ist, an dem der Spülkolben (106) jeweils ab der ersten und zweiten Schaltstellung anliegt, wobei ein jeweiliger Anschlagkolben (138, 140) mit einer Kraft in Richtung des Spülkolbens (106) beaufschlagbar ist (138, 140).

6. Hydraulikanordnung nach Anspruch 5, wobei die Kraft, von der der Anschlagkolben (138, 140) beaufschlagbar ist, durch eine Kolbenfeder (142, 144) und/oder den Druck eines Druckmittels und/oder durch einen magnetischen Aktor verursacht ist.

7. Hydraulikanordnung nach Anspruch 5 oder 6, wobei ein Anschlagkolbensitz (178) im Spülventil (101) vorgesehen ist, an dem der Anschlagkolben (138, 140) in der Neutralstellung und in der jeweiligen ersten und zweiten Schaltstellung des Spülkolbens (106) anliegt.

8. Hydraulikanordnung nach Anspruch 7, wobei Spülkolbenanschläge (164) zur Begrenzung eines Verschiebewegs des Spülkolbens (106) in den jeweiligen weiteren Schaltstellungen vorgesehen sind.

9. Hydraulikanordnung nach einem der Ansprüche 4 bis 8, wobei im Bereich von Endabschnitten (118, 120) des Spülkolbens (106) jeweils eine Federscheibe (146) angeordnet ist, über die der Spülkolben (106) mit der Federkraft der jeweiligen Ventilfeder (130, 132) beaufschlagbar ist, wobei die jeweils in Verschieberichtung des Spülkolbens (106) liegende Federscheibe (146) zusammen mit dem Spülkolben (106) verschiebbar ist, und wobei ein Scheibensitz (152) im Spülventil (101) für eine jeweilige Federscheibe (146) vorgesehen ist, gegen den diese durch die Federkraft in Richtung des Spülkolbens (106) spannbar ist.

10. Hydraulikanordnung nach Anspruch 9, wobei die Endabschnitte (118, 120) des Spülkolbens (106) radial zurückgestuft sind, wodurch jeweils eine Ringstirnfläche (122, 124) am Spülkolben (106) ausgebildet, an die die jeweilige Federscheibe (146) zur Kraftbeaufschlagung des Spülkolbens (106) mit der Federkraft der Ventilfeder (130, 132) anlegbar ist.

11. Hydraulikanordnung nach einem der Ansprüche 8 bis 10, wobei der Spülkolben (106) über die jeweilige Federscheibe (146) an dem jeweiligen Spülkolbenanschlag (164) in der jeweiligen weiteren Schaltstellung anliegt.

12. Hydraulikanordnung nach einem der Ansprüche 5 bis 11, wobei der Anschlagkolben (138, 140) einen Radialbund (174, 188) mit einer Anlagefläche (176) zum Anliegen an den jeweiligen Anschlagkolbensitz (178) aufweist.

13. Hydraulikanordnung nach einem der Ansprüche 5 bis 12, wobei der Anschlagkolben (138, 140) in einer am Ventilgehäuse (102) festlegbaren Gehäusepatrone (134, 136) angeordnet ist, wobei in dieser zusätzlich ein Federraum zur Aufnahme der Kolbenfeder (142, 144) und/oder ein Druckraum ausgebildet ist.

14. Hydraulikanordnung nach Anspruch 13, wobei die Gehäusepatrone (134, 136) zusammen mit dem Anschlagkolben (138, 140) und der Kolbenfeder (142, 144) als Einschraub-Baugruppe beziehungsweise Cartridge ausgebildet ist.

15. Hydraulikanordnung nach Anspruch 13 oder 14, wobei sich eine jeweilige Ventilfeder (130, 132) an einer jeweiligen Gehäusepatrone (134, 136) abstützt, und wobei der Spülkolbenanschlag (164) an der Gehäusepatrone (134, 136) ausgebildet ist.
